# EUROPEAN PATENT SPECIFICATION

(11) **EP 3 414 039 B1**
(45) Date of publication and mention of the grant of the patent: **14.06.2023**
(21) Application number: 17749879.7
(22) Date of filing: 10.02.2017
(51) Int. Cl.: B23K 1/00, B23K 1/20

(54) **THERMAL TREATMENT FOR PRECONDITIONING OR RESTORATION OF A SOLDER JOINT**
WÄRMEBEHANDLUNG ZUR VORBEHANDLUNG ODER RESTAURATION EINER SCHWEISSNAHT
TRAITEMENT THERMIQUE POUR PRÉCONDITIONNER OU RESTAURER UN JOINT DE SOUDURE

(30) Priority: 11.02.2016 US 201662294065 P
(43) Date of publication of application: 19.12.2018
(73) Proprietor: Celestica International LP, Toronto, ON M3C 1V7 (CA); DY 4 Systems Inc., Kanata, ON K2V 1A6 (CA); The Governing Council Of The University Of Toronto, Toronto, Ontario M5S 1A1 (CA); BAE Systems Controls Inc., Endicott, New York 13760 (US); Honeywell International Inc., Morris Plains, NJ 07950 (US); Rockwell Collins, Inc., Cedar Rapids, IA 52498 (US)
(72) Inventor: SNUGOVSKY, Polina, Toronto Ontario M3C 1V7 (CA); KOSIBA, Eva, North York, Ontario M2N 7C2 (CA); KENNEDY, Jeffrey K., Minneapolis Minnesota 55418 (US); HILLMAN, David, Cedar Rapids Iowa 52498 (US); ADAMS, David, Cedar Rapids Iowa 52498 (US); MESCHTER, Stephan, Endicott New York 13760 (US); PEROVIC, Doug D., Toronto Ontario M5S 3E4 (CA); ROBINSON, Michael O., Phoenix Arizona 85083 (US); JUAREZ, Joseph, Scottsdale, Arizona 85259 (US); STRAZNICKY, Ivan, Kanata Ontario K2V 1A6 (CA); SNUGOVSKY, Leonid, Toronto Ontario M5S 3E4 (CA); ROMANSKY, Marianne, Toronto Ontario M3C 1V7 (CA)
(74) Representative: HGF
(86) International application number: PCT/CA2017/050164
(87) International publication number: WO 2017/136951

(56) References cited:
- EP-A1- 0 336 575
- EP-B1- 1 339 523
- US-A- 5 221 038
- US-A- 6 015 082
- H. TAKAO, A. YAMADA AND H. HASEGAWA: "Mechanical Properties and Solder Joint Reliability of Low-Melting Sn-Bi-Cu Lead Free Solder Alloy", R&D REVIEW OF TOYOTA CRDL, vol. 39, no. 2, June 2014 (2014-06), pages 49-56, XP002792047,

## Description

### TECHNICAL FIELD

The following relates to methods for soldering, and in particular to a thermal treatment operation which is applied for preconditioning and/or restoration of a solder joint.

### DESCRIPTION OF THE RELATED ART

Historically, lead (Pb) containing solders, for example, tin-lead (Sn-Pb) solders, were used in the manufacture of electronics. However, lead and many lead alloys are toxic. Due to increasingly strict worldwide environmental regulations, lead solders are increasingly being replaced with less toxic lead-free solder counterparts that also exhibit low melting points and sufficient conductivity for electronics applications.

Lead-free solders containing alloys of tin (Sn) with silver (Ag) and/or copper (Cu) have been adopted by industry to replace the lead-containing solders. SAC 305 is an example of a tin-silver-copper alloy solder that is widely used in industry. The composition of SAC305 is 96.5% tin, 3% silver and 0.5% copper.

It is commonly known that the solder properties of both Sn-Pb alloys and their replacement Sn-Ag-Cu alloys, such as SAC305, degrade over time. The primary reason for property degradation in Sn-Pb solder is grain growth, whereas in SAC305, the second phase (intermetallic) coarsening results in degradation of the solder properties over time.

Early lead free solders typically required processing temperatures higher than those historically used for production with tin-lead solders. These early lead-free solders therefore required the use of specialized circuit board materials that could withstand the higher temperatures. Lead-free solders comprising alloys of tin (Sn), silver (Ag), copper (Cu) and bismuth (Bi) have been developed for low-temperature solder applications that do not require specialized circuit board materials. Examples of such low temperature lead free solders are described in US 2015/0258636. It has been found that individual lead-free solder joints formed using these alloys are typically composed of a few or even only one Sn-rich grain. As a result, failure of the solder joint may result when cleavage by crack propagation along the grain boundary occurs in response to impact or stress accumulation on the joint. Therefore, the typical grain structure of solder joints formed from tin, silver, copper and bismuth alloys results in unpredictable electronic solder joint reliability, with a wide distribution of lifetimes in the field.

Another problem encountered with lead-free solder joints formed using alloys of tin, silver, copper and bismuth is that the Bi particles are unevenly distributed in the microstructure. The failure mechanism described above, of cleavage by crack propagation along a grain in response to impact or stress accumulation in the joint, is exacerbated by the brittleness of the precipitates.

The failure mechanisms resulting from the few large Sn grains and the uneven distribution of Bi particles may be summarized as failure due to unreliable solder joints caused by segregation of large, hard Bi and intermetallic compound (IMC) particles around unidirectional anisotropic Sn grains. The deformation behavior of as-cast lead-free solder joints in relation to grain size and orientation is described by Tae-Jyu Lee, Bieler and Arfaei. (Tae-Kyu Lee, Bite Zhou, Lauren Blair, Kuo-Chuan Liu, and Thomas R. Bieler, Sn-Ag-Cu Solder Joint Microstructure and Orientation Evolution as a Function of Position and Thermal Cycles in Ball Grid Arrays Using Orientation Imaging Microscopy, Journal of Electronic Materials, DOI: 10.1007/s11664-010-1348-4, 2010 TMS; R. J. Coyle, K. Sweatman and B. Arfaei, Thermal Fatigue Evaluation of Pb-Free Solder Joints: Results, Lessons Learned, and Future Trends, JOM, October 2015.)

It is possible to increase the number of grains of Sn in lead-free electronic solder joints through the use of aluminum (Al) as an additional alloying element. The alloys with Al have a trend to nucleate more Sn grains. However, the structure still consists of a low number of grains compared to Sn-Pb isotropic solder joints. (Iver E. Anderson, Jason W. Walleser, Joel L. Harringa, Fran Laabs and Alfred Kracher, Nucleation Control and Thermal Aging Resistance of Near-Eutectic Sn-Ag-Cu-X Solder Joints by Alloy Design, Journal of Electronic Materials, Vol. 38, No. 12, 2009.) Therefore, alternative solutions to the problem of the number of Sn grains are still needed.

The segregation of Bi particles and the impact of this phenomenon on solder joint reliability have not yet attracted significant research attention. Therefore, solutions to this problem are needed.

Annealing of lead-tin and lead-tin-antimony solders to improve solder stability is described by B.T. Lampe; "Room Temperature Aging Properties of Some Solder Alloys Welding Research Supplement," October 1976; p330-340 ("Lampe"). Lampe describes changes in the microstructure observed in the lead-containing alloys over a period of aging at room temperature, and found that heating at 200°F could produce similar characteristics in a tin-lead-antimony alloy, but at a faster rate. Lampe also found that the annealing at 200°F resulted in a somewhat higher shear strength and hardness in the final stabilized product.

In another study, heat treatment is used to artificially accelerate aging of solder alloys to study the properties of the solder alloys and to predict field behavior over time. In mainstream applications of Sn-based Pb-free solder, properties such as hardness and number of thermal cycles to failure degrade over time. This property degradation is caused by microstructure degradation related to the second phase particles coarsening as described by T. K. Lee. (Tae-Kyu Lee, Hongtao Ma, Kuo-Chuan Liu and die Xue, Impact of Isothermal Aging on Long-Term Reliability of Fine-Pitch Ball Grid Array Packages with Sn-Ag-Cu Solder Interconnects: Surface Finish Effects, Journal of Electronic Materials, Vol. 39, No. 12, 2010.)

Beneficial changes in the microstructure of Sn-Zn-Cu alloys by annealing at elevated temperatures for extended time periods was reported by Klasik. (A. Klasik et al. "Relationship Between Mechanical Properties of Lead-Free Solder and Their Heat Treatment Parameters" Journal of Materials Engineering and Performance, vol. 21(5) May 2012, p620-628.) These microstructural changes, observed after heating at elevated temperatures for time periods of from 168 to 24 hours, result in the improvement of the mechanical strength.

A method for conditioning a solder joint is disclosed by H. TAKAO, A. YAMADA AND H. HASEGAWA: "Mechanical Properties and Solder Joint Reliability of Low-Melting Sn-Bi-Cu Lead Free Solder Alloy",R&D REVIEW OF TOYOTA CRDL, vol. 39, no. 2, June 2014 (2014-06), pages 49-56.

### SUMMARY

It has been found that solder joints (interconnects) in an assembly can be conditioned to improve the solder joint properties. In one aspect the conditioning treatment can improve the solder joint properties by the formation of smaller bismuth particles that are more evenly distributed in the solder joint.

In one aspect there is provided a method for conditioning a solder joint as defined in claim 1. Preferred embodiments are defined in dependent claims 2-5.

In another aspect there is provided a process for preparing an electronic assembly as defined in claim 6.

### BRIEF DESCRIPTION OF THE DRAWINGS

Embodiments will now be described by way of example only with reference to the appended drawings wherein:
FIG. 1 is a flow diagram illustrating a soldering process with a thermal treatment step applied as a preconditioning operation;
FIG. 2 is a flow diagram illustrating a thermal treatment step applied as a restoration operation to a previously soldered joint;
FIG. 3 is a polarized light image showing Sn grains in an interconnect (solderjoint);
FIG. 4 is a polarized light image of lead free solder interconnects in a 14x14 ball grid array (BGA);
FIG. 5 is a SEM image of a lead-free solder joint showing uneven distribution of Bi particles;
FIG. 6 is a SEM image of grain microstructures in a lead-free solder interconnect after a standard reflow process;
FIG. 7 is a SEM image of grain microstructure in a lead-free solder interconnect after a thermal treatment following the standard reflow process;
FIG. 8 is an electron backscatter diffraction (EBSD) analysis of the image of FIG. 6;
FIG. 9 is an EBSD analysis of the image of FIG. 7;
FIG. 10 is a graph showing the solvus temperature curve for SnBi compounds, the Y axis showing temperature in degrees Celsius and the X axis showing increasing percent Bi from left to right, with 0% Bi and 100% Sn at left with the experimentally determined solvus temperatures for specific compositions plotted on the graph;
FIG. 11 is a bar graph depicting hardness after aging at room temperature for a specific number of days as shown in the legend;
FIG. 12 is a bar graph depicting hardness after aging at 100°C for a specific number of days as shown in the legend;
FIG. 13 includes SEM images of microstructure changes over time with heating at 125°C;
FIG. 14 is a schematic showing microstructural changes during thermal treatment: Bi dissolution at high temperature, new grain formation and small particles of Bi precipitation at the cooling stage;
FIG. 15 is an SEM image showing Bi pinning of grain boundaries in a SnAgCuBi alloy;
FIG 16 is an SEM image showing microstructure changes with temperature cycling in a SnAgCuBi alloy;

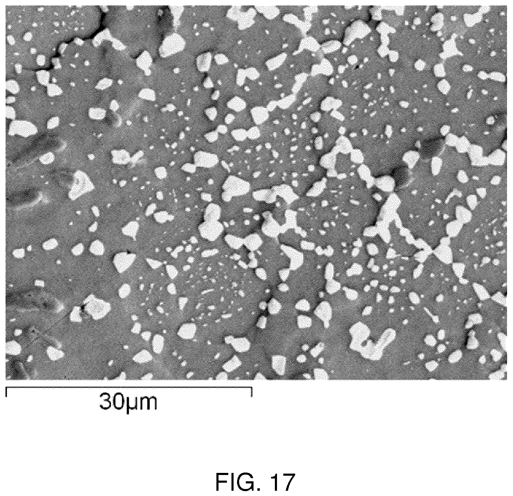

FIG 17 is an SEM image showing microstructure in a SnAgCuBi alloy coarsened after aging;

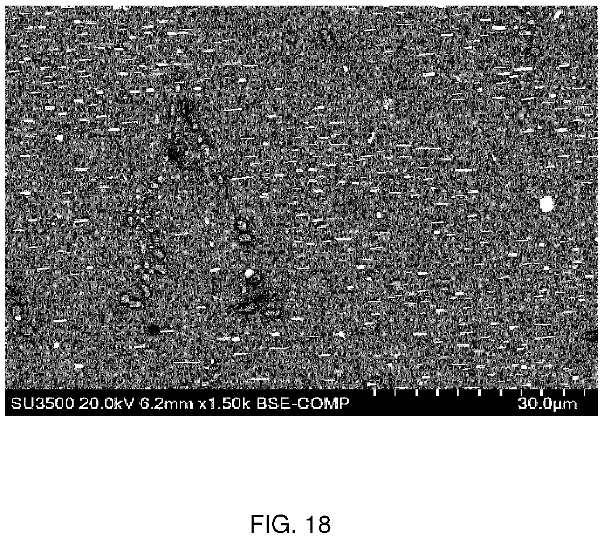

FIG 18 is an SEM image showing microstructure changes after a restoration treatment in a SnAgCuBi alloy.
Figure 19 is a graph depicting creep rate changes after aging at 70°C for a specific number of days and after thermal treatment as shown in the legend.
Figure 20 is a graph showing DSC scans of a composition of Sn / 0.7%Cu / 7%Bi.

### DETAILED DESCRIPTION

The following relates generally to soldering processes and more specifically to lead-free solder containing bismuth. As described below, it has been found that a thermal treatment or processing operation can be applied to such solders to create a more reliable grain-refined solder joint with an even distribution of bismuth across the solder joint. The thermal treatment step can be incorporated into electronic assembly manufacturing, e.g., of circuit boards having soldered components.

As is known in the art, a standard electronics assembly soldering process includes the following steps, which have been implemented in various applications for a long period of time:
a) solder paste deposition by printing;
b) placement of surface mount components;
c) reflow soldering (melting of printed solder in an oven and solder joint formation)
d) if applicable, soldering of pin through hole components by "wave" solder in a pot; and
e) assembly cleaning as necessary.

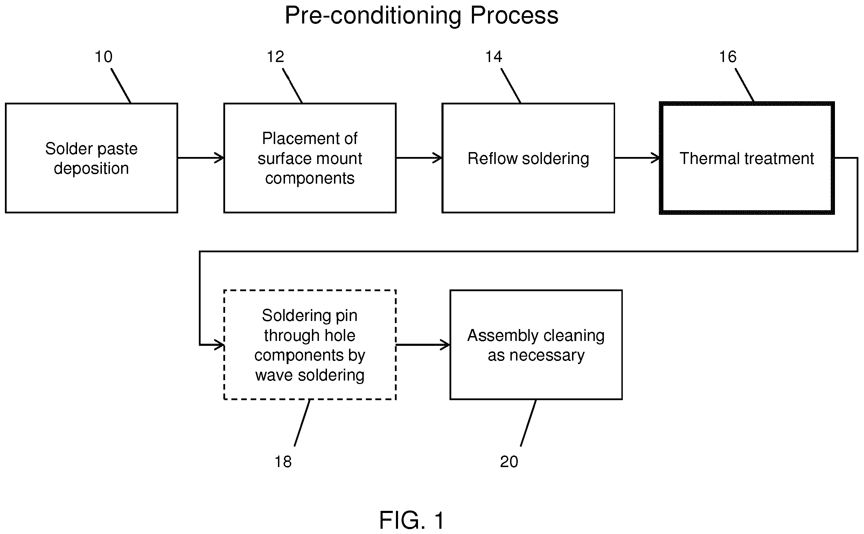

It has been determined that for lead-free solders containing bismuth, an additional thermal treatment step can be applied after the initial solder joint formation step, known as reflow, to improve the solder joint properties. FIG. 1 illustrates the above process with the inclusion of this additional thermal treatment step. This thermal treatment step, which may also be referred to herein as "preconditioning", creates a more reliable grain-refined solder joint with a more even distribution of Bi across the solder joint. The thermal treatment may be combined with other assembly-level thermal treatments such as curing of conformal coating or high operating temperature burn-in. As such, the particular embodiment shown in FIG. 1 is for illustrative purposes only. The pre-conditioning step may take place before or after other processing steps which occur after reflow. The pre-conditioning step will take place before the assembly is used in the field.

In the process exemplified in FIG. 1, solder paste deposition is applied to the circuit board at step 10 and surface mount components are placed on the board at step 12. Reflow soldering is then performed at step 14, which includes heating the board to melt the solder paste and thus form the solder joint with the leads of the component that have been aligned with the solder paste. The thermal treatment step 16 is applied after the solder reflow step at 14 to improve the solder joints as will be described in greater detail below. Step 18 includes soldering pin through hole components, if applicable (as illustrated in dashed lines), to the board. This normally includes a wave soldering process using a pot wherein a wave of molten solder comes into contact with the through hole locations on the board as it passes over the pot to solder the through hole pins to the board. Some assembly cleaning may be necessary at step 20, as is known in the art. This step may include a visual inspection of the soldered joints (manual or machine) as well as various other quality control measures.

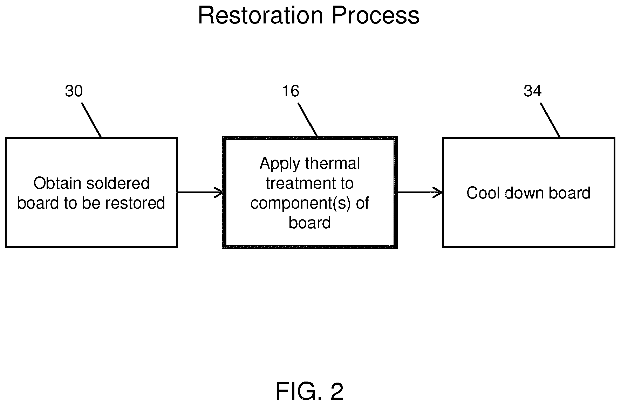

It has also been found that the principles described herein can also be used for the restoration of acceptable solder joint properties after a period of time and possible use has elapsed. For example, restoration may be done after several years of product service. A similar thermal treatment step can be applied to a previously prepared solder joint containing a lead-free bismuth containing alloy. The thermal treatment step applied for "restoration" can be used to restore a more reliable grain-refined solder joint with even distribution of Bi across the solder joint, as part of a restoration and refurbishment process, after the solder interconnect structure has coarsened over time in service. FIG. 2 illustrates an example of an application for applying the heat treatment step 16 to a previously soldered board that has been in use for a period of time. A board to be restored is obtained at step 30 and the thermal treatment step 16 applied to one or more components on the board. A cool down step 34 is also applied, in which new small particles precipitate evenly in the matrix, to improve thermomechanical properties as discussed in greater detail below. A preferred time for the restoration of field products may be estimated either from historical data collected for products used in the field or by estimation of the effect of diffusion rates of Bi in the solder at the field conditions.

In a particular aspect the particles of Bismuth in a bismuth containing lead-free solder joint after conditioning treatment will be smaller and more evenly distributed than the particles before conditioning.

In a particular embodiment, the lead-free solder alloy containing bismuth further contains tin. In still a further embodiment the solder alloy includes one or more of silver and copper. In a further embodiment, the solder has a bismuth concentration between about 1 and about 10 weight percent. In a further embodiment the bismuth concentration is equal to or greater than 2 weight percent. In a particular embodiment, the bismuth concentration is between about 2 and about 7 weight percent. In another embodiment, the composition of lead-free bismuth containing solder has from 0 to 5% Ag, 0 to 1% Cu and 1 to 10% Bi with the remainder being Sn (percentages are weight percent). In a further embodiment the composition of lead-free bismuth containing solder has from >0 to 5% Ag, >0 to 1% Cu and from about 2 to 7% Bi with the remainder being Sn (percentages are weight percent).

The term "pinning" as used herein refers to the action of a point defect which may be a second phase precipitate in a material which acts as a barrier to movement of a dislocation in the crystal structure.

The term "intermetallic compound" or "IMC" is a solid-state compound exhibiting metallic bonding, defined stoichiometry and ordered crystal structure.

The term "creep" or "creep rate" as used herein means the tendency of a solid material to move slowly or deform permanently under the influence of mechanical stresses, and is measured by techniques such as nano-indentation.

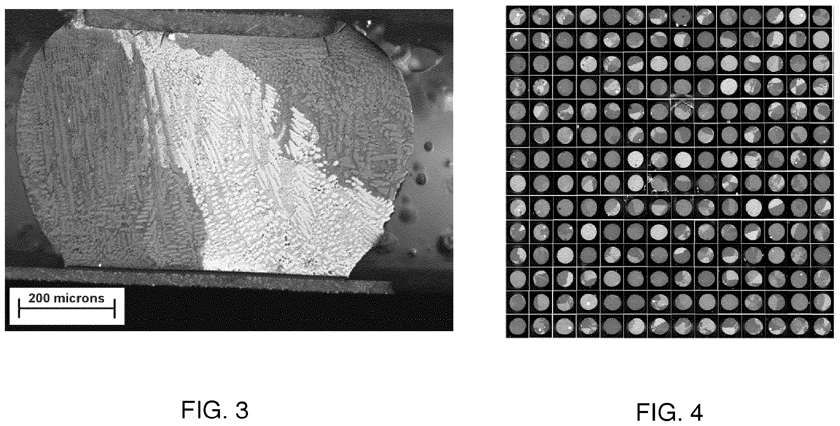

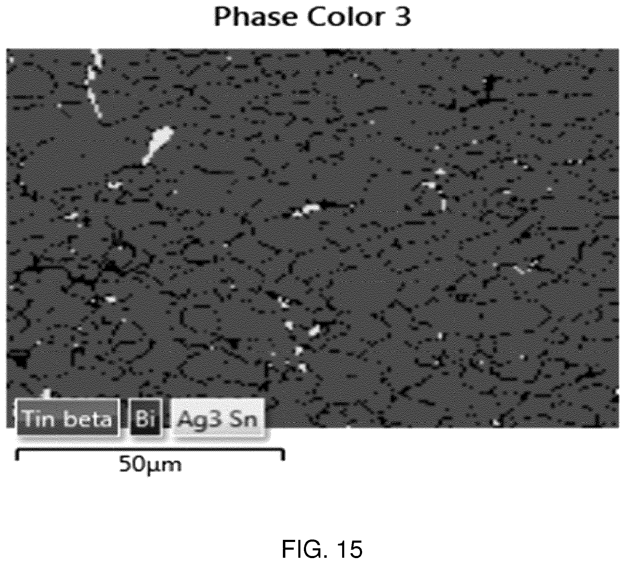

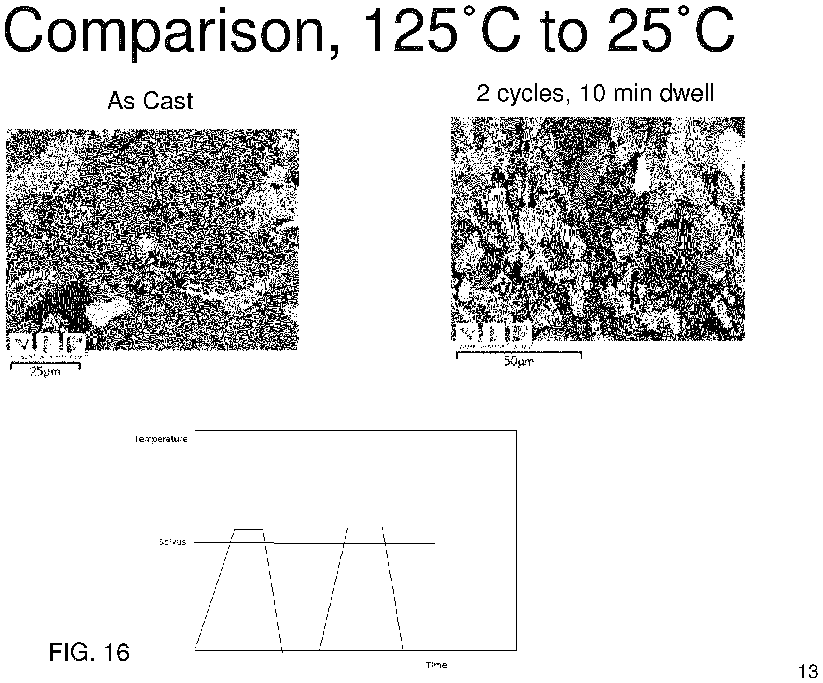

The thermal treatment step 16 is described in more detail below, making reference to FIGS. 3 through 16.

It is generally known that solder interconnects with desirable mechanical properties can be achieved by using a material having a homogeneous structure with small grains of ductile matrix and an evenly distributed second phase pinning the grain boundaries. These features strengthen the solder material by acting as a barrier which prevents a dislocation which may occur in the material from traveling through a lattice when a relatively small stress is applied.

It has been recognized that individual lead-free solder interconnects (solder joints) are typically composed of a few or even only one Sn-rich grain. FIG. 3 is an SEM image which shows 3 grains in one ball grid array (BGA) interconnect. In FIG. 4, a polarized light image of a 14x14 BGA is provided which shows single crystals with only a few crystal orientations with each joint having a different orientation.

The method of conditioning and in particular thermal treatment step 16 described herein is aimed at converting the as-cast microstructure of the lead-free bismuth-containing alloys having large Sn dendrites (one or several grains in a solder joint) and segregated, relatively large Bi particles in the interdendritic spaces, into the desired more reliable structure having many small Sn grains and more evenly distributed Bi particles.

The overall performance of lead-free solder interconnects is dictated by the properties of β-Sn, which exhibits a significant anisotropic nature due to its special body-centered tetragonal (BCT) crystal structure with lattice parameters of a = 0.5632 nm, c = 0.3182 nm, and c/a = 0.547. Therefore, the small number of grains in an interconnect and the significant inherent anisotropic nature of the thermomechanical properties of β-Sn make Pb-free solder interconnects behave differently from their Sn-Pb counterparts, and the crystallographic orientation of each individual grain plays a very important role in dictating the overall thermomechanical performance. The stress state and strain history of every joint is different, because the orientation and boundary conditions are different.

These anisotropic interconnects can result in at worst, unpredictable performance, and at best, electronic solder joint reliability with a wide distribution of lifetimes in the field. The specific failure mechanism that is known to occur is early life solder joint cleavage by crack propagation along a grain in response to impact or stress accumulation in the joint.

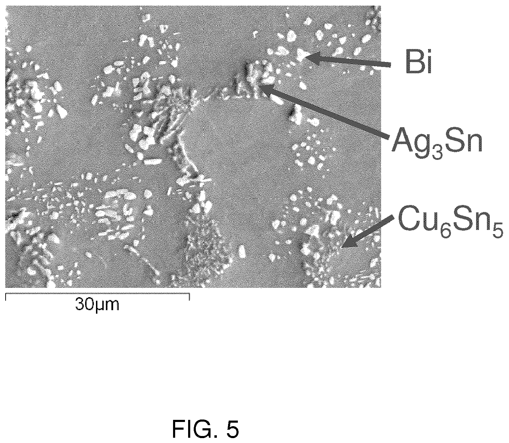

It has also been recognized that after solidification of a lead-free bismuth-containing solder joint, the Bi particles are unevenly distributed in the microstructure as illustrated in FIG. 5. The Bi particles precipitate from the Sn matrix predominately between the Sn dendritic arms and in interdendritic spaces close to the intermetallic particles such as Ag₃Sn and Cu₆Sn₅, solidifying from the last portion of liquid. The specific failure mechanism that occurs is early life solder joint cleavage by crack propagation along a grain in response to impact or stress accumulation in the joint, exacerbated by the brittleness of the precipitates.

The preconditioning and restoration treatments shown in FIGS. 1 and 2 can be used to treat electronic solder assemblies with lead-free solder comprising SnBi, Sn(Ag)Bi, Sn(Cu)Bi or Sn(Ag)CuBi to advantageously achieve better properties for the solder joints as follows.

The thermal treatment step 16 is utilized to address the aforementioned issue with random crystal orientations and uneven microstructures. The thermal treatment step 16 addresses this issue by obtaining a solder joint having many small randomly oriented grains with more uniformly distributed Bi particles. The resulting microstructure is somewhat similar to Sn-Pb.

The recrystallization process can significantly change the crystallographic orientation and microstructure, and therefore, the mechanical properties of the bismuth-containing, lead-free solder interconnects.

According to the dispersion strengthening theory, the presence of second-phase particles can reinforce the solder matrix and inhibit the localized softening and deformation in the recrystallized region, improving the overall mechanical performance of lead-free solder interconnects.

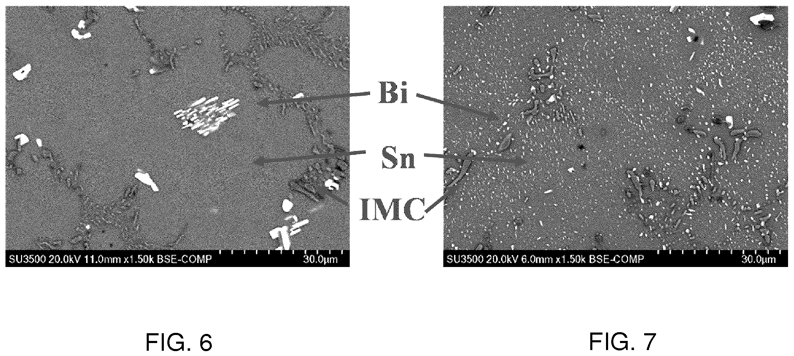

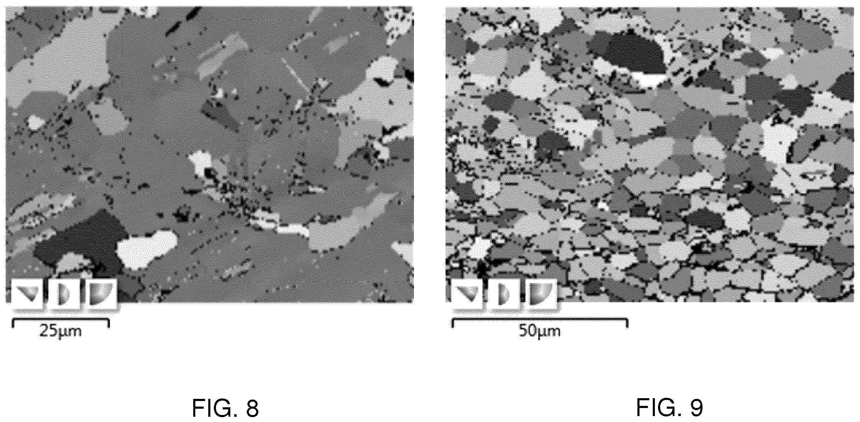

The SEM image in FIG. 6 shows an example of the grain structure after standard reflow with a bismuth containing lead-free solder. The image shows the large Bi precipitate and uniaxial grain orientation (the corresponding grain orientation is shown in FIG. 8 using EBSD analysis). FIG. 7 shows the microstructure of the same sample after thermal treatment. The sample after the thermal treatment has small evenly distributed Bi particles in the Sn matrix with many differently oriented grains (the grain orientation is shown in FIG. 9 using EBSD analysis).

FIG. 8 shows the grain structure after standard reflow, with large Bi precipitate (more readily visible in FIG. 6) and uniaxial grain orientation. FIG. 9 shows the microstructure after thermal treatment, with small evenly distributed Bi particles in Sn matrix (more easily visible in FIG. 7), with many differently oriented grains. The microstructures shown in the images of FIGS. 6 through 9 are of interconnects formed using the Violet alloy having the composition Sn / 2.25%Ag / 0.5%Cu / 6%Bi, wherein the percentages are weight percentages and the Sn forms the balance of the composition. FIGS. 6 and 8 are images taken after reflow and solidification, while FIGS. 7 and 9 are images taken after a conditioning treatment comprising heating the sample for 50 hours at 125°C then allowing the sample to cool, following the original reflow and solidification process.

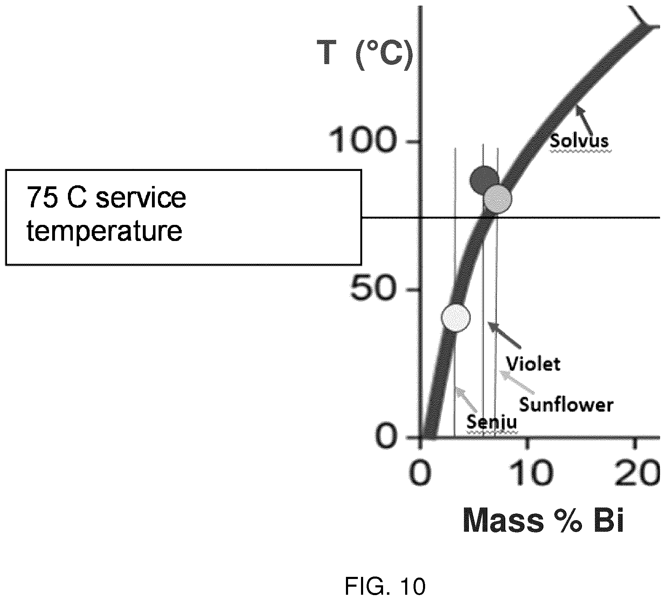

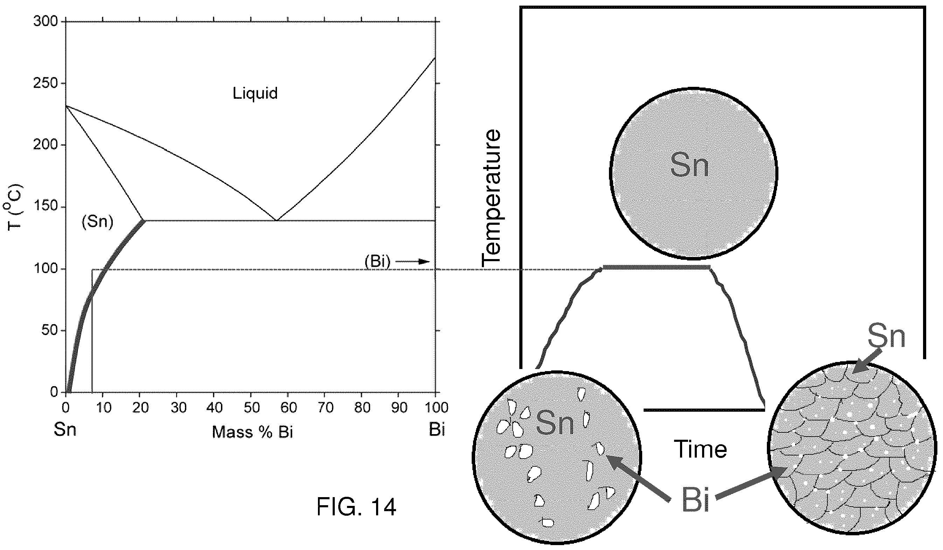

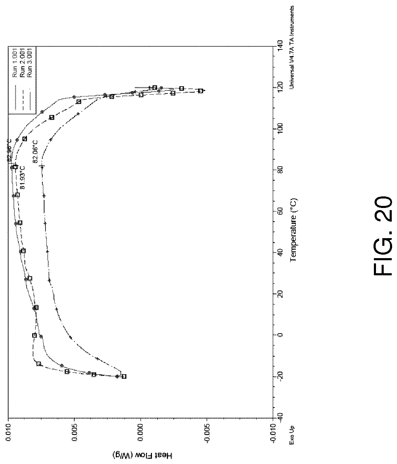

Table 1 shows the compositions of a variety of alloys that were investigated indicating the percent weight of the components. Where the percentage of Sn is not defined in the composition, Sn is assumed to make up the balance of the composition. SnPb and SAC305 were used as standards for comparison. Different thermal treatments were performed on the alloy compositions both above the temperature of Bi dissolution in Sn (above solvus) and below the temperature of Bi dissolution in Sn (below solvus). The solvus temperature for each alloy containing Bi was experimentally determined using DSC (differential scanning calorimetry) and microstructural analysis. By way of example, FIG. 20 shows a graph of DSC scans obtained for the Sunflower composition. FIG. 10 illustrates a solvus temperatures curve for compositions of Sn and Bi, with the Y axis showing the change in temperature in degrees celsius and the X axis showing increasing percentage of Bi from left to right; with 100% Sn at the left. The portion of the curve displayed in FIG. 10 is the tin rich portion of the phase diagram shown in FIG. 14. The experimentally determined solvus temperatures for the compositions Senju, Violet and Sunflower (defined in Table 1) are plotted on the solvus curve shown in FIG. 10.

**Table 1: Alloys Investigated**

| Alloy number | Alloy Name | Composition | Comment |
|---|---|---|---|
| 1 | SnPb | Sn **/37%Pb** | ▪ Baseline |
| 2 | SAC305 | Sn / 3%Ag / 0.5%Cu | ▪ Pb-free Baseline |
| 3 | Senju M42 | Sn / 2%Ag / 0.75%Cu / 3%Bi | ▪ Commercially Available |
| | | | ▪ Low Bi content |
| 4 | Violet | Sn / 2.25%Ag / 0.5%Cu / 6%Bi | ▪ Performed well in vibration and thermal cycling Screening Test |
| 5 | Sunflower | Sn / 0.7%Cu / 7%Bi | ▪ No Ag |
| | | | ▪ Lower cost alternative |

Table 2 describes the thermal treatment parameters applied to various soldering alloys; the compositions of the alloys tested are defined in Table 1. (The "+" symbol indicates that the alloy has been tested under the condition described in the left hand columns.) The solvus line for the lead-free alloys can be found in FIG. 10.

**Table 2: Experimental Parameters for Thermal Treatments**

| Name of thermal treatment | Treatment # | Parameters tested | | | Alloys (from Table 1) | | | | |
|---|---|---|---|---|---|---|---|---|---|
| | | Temp, °C | Time, hours | cycles | 4 | 5 | 3 | 2 | 1 |
| Annealing pre-conditioning | 1 | 125 | 2,4,8 16, 24, 50, 100, 200 | N/A | + | + | | + | + |
| | 2 | 75 | 2, 4, 8 16, 24, 50, 100, 200 | N/A | + | + | + | + | + |
| | 3 | 25 | 24, 50, 100, 200, 1000, 2000, 6000 | N/A | + | + | + | + | + |
| Cycling pre-conditioning | 4 | 125 | 0.1, 0.5, 2, 8 | 2 | + | + | | | |
| | 5 | 75 | 0.1, 0.5, 2, 8 | 8 | + | + | + | | |
| Annealing restoration after 70°C 300 hours | 6 | 120, 125 | 8, 24 | N/A | + | + | | | |
| Annealing restoration after 25°C 2000 hours | 7 | 125 | 8, 24 | N/A | + | + | | | |
| Cycling restoration after 75°C 300 hours | 8 | 125 | 0.1, 0.5 | 2, 8 | + | + | | | |
| Cycling restoration after 25°C 2000 hours | 9 | 125 | 0.1, 0.5 | 2, 8 | + | + | | | |

Data from the experiments described in Table 2 have shown that the desirable results of grain refinement and more even distribution of small Bi particles may be achieved by heating the alloys above solvus or to a temperature in the proximity of solvus. The experimental data showed that with exposure for more than 24 hours at temperatures above solvus or with exposure for 100 hours or more at temperatures below solvus good results in terms of grain refinement and more even distribution of small Bi particles is achieved.

It has been found that by employing multiple cycles of heating and cooling, the amount of time required to achieve the desired results of grain refinement and more even Bi particle distribution can be dramatically reduced. While experimental trials using as many as 8 heating cycles were carried out, it was found that even using as few as two cycles with 10 minutes dwell at a temperature above solvus results in a structure with small grains with different orientation.

Accordingly, a thermal treatment method has been discovered that can improve solder joints made from Pb-free alloys containing Bi. In a particular embodiment the heating temperature will be a temperature on or near the solvus line for the composition; up to 5°C below the solvus or up to 5°C above the solvus.

In a further aspect the Pb-free bismuth containing alloy is an alloy comprising at least 2%Bi by weight. In yet another aspect the alloy has from about 0 to about 5% Ag, about 0 to about 1% Cu and about 1 to about 10% Bi with the remainder being Sn (percentages are weight percent). In a further embodiment the composition of lead-free bismuth containing solder has from >0 to about 5% Ag, >0 to about 1% Cu and from about 2 to about 7% Bi with the remainder being Sn (percentages are weight percent).

In still a further aspect the temperature for the thermal treatment whether for annealing or cyclic treatment will be selected such that it does not exceed a temperature which would damage other aspects of the circuit board of which the solder forms a part during the selected time duration of the heating.

In a particular aspect the thermal treatment step 16 includes the following additional sub-steps after the reflow:
(1) Heating an electronic assembly to a temperature near the solvus of the alloy depending on the alloy used for the solder composition. For example for solder compositions as shown in FIG. 10 and Table 3 the temperature may be in the range of 45-125 °C.
(2) Thermal exposure of the interconnect to achieve full Bi particle dissolution and even distribution of subsequently precipitated Bi particles in Sn to approach the r = 0 condition. Where in the r is the radius of the Bi particle and the radius of the Bi particle, r, is mathematically expressed as a function of the annealing time, t, by the parabolic relationship, r²= Kt. The parabolic coefficient K is a function of the temperature, T, by an Arrhenius equation of K = K₀ exp(-Qk/RT), where R is the gas constant.
(3) Cooling down to ambient temperature for recrystallization and uniform Bi particle precipitation from a solid solution of Bi in Sn.

**Table 3: Experimentally determined solvus temperatures**

| **Alloy** | **Sample 1 Peak (°C)** | **Sample 2 Peak (°C)** | **Sample 3 Peak (°C)** | **Average (°C)** | **Difference (°C)** |
|---|---|---|---|---|---|
| **Sunflower (Sn/0.7%Cu/7%Bi)** | 83 | 82 | 82.06 | 82 | 3 |
| **Sn/7%Bi** | 82 | 76 | N/A | 79 | |
| **Violet (Sn/2.25%Ag/0.5%Cu/6%Bi)** | N/A | 86 | 92 | 89 | 7 |
| **Sn/6%Bi** | 82 | 82 | N/A | 82 | |
| **Senju (Sn/2%Ag/0.7%Cu/3%Bi)** | N/A | N/A | 42 | 42 | 6 |
| **Sn/3%Bi** | N/A | N/A | 36 | 36 | |

The compositions are defined with respect to their weight percentages with Sn making up the balance of the composition.

Preconditioning may be done for several minutes or several hours and up to several days, in order to achieve full dissolution of the Bi particles and even distribution of the Bi across all grains in the solder joint. The time and temperature duration is dependent on the selected Bi-containing alloy. For example, Violet alloy requires up to 50 hours of thermal treatment for full Bi dissolution. Pre-conditioning (or reconditioning) under non-optimized conditions, for example, at a temperature or for a time that is not optimal may result in partial dissolution which may also provide Bi particle size and/or particle distribution which is improved over samples that have not undergone a thermal treatment step. Preconditioning or reconditioning under non-optimized conditions may still provide solder interconnects having acceptable properties depending on the application.

In practice the time and temperature for the annealing or heat cycling step may be selected to provide suitable conditioning results and may also be adapted or conformed to other manufacturing requirements. The time for a single step annealing process may, for example, range from about 10 minutes to about 300 hours, from about 10 minutes to about 100 hours, from about 10 minutes to about 50 hours, from about 10 minutes to about 24 hours, from about 2 hours to about 50 hours or from about 2 hours to about 24 hours. The time duration for one cycle of a multicycle heating process may be from about 5 min to about 8 hours.

Solder joint recrystallization from anisotropically oriented large grains to a grain structure of many small grains isotropically oriented (non-oriented) has been found to result in improved solder joint reliability due to improved creep and fatigue behaviour and improved global modulus.

The interim indicator of solder joint improvement is hardness, which is known to correlate to solder joint reliability. In contrast to the SnAgCu (SAC) alloy, which loses its hardness over time at room and elevated temperature, alloys with Bi are stable and keep constant hardness under the same conditions.

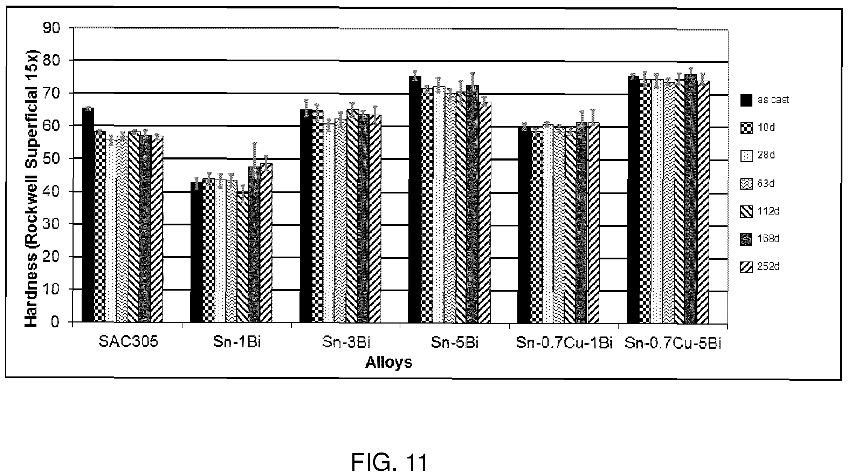

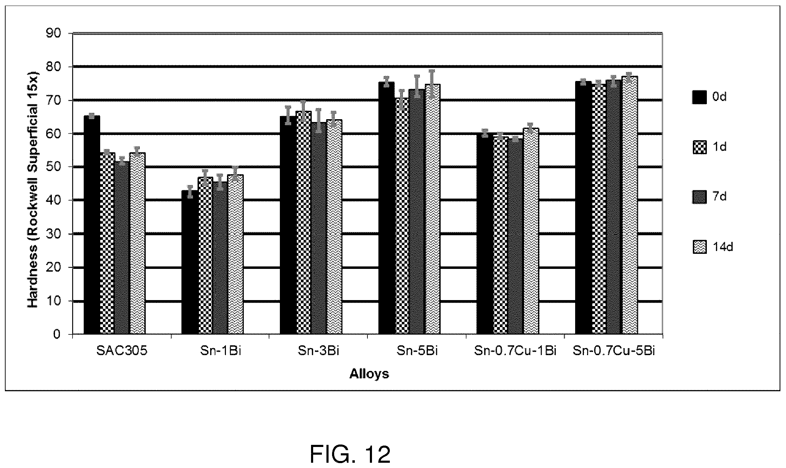

It has been found therefore that alloys of Sn(Ag)CuBi, as shown in FIGS. 11 and 12 increase or plateau in hardness with time. This illustrates the binary and ternary alloy behaviors with respect to Bi and Cu. In the bar graphs of FIGS. 11 and 12 the Y axis shows the hardness scale, Rockwell Superficial 15x, which refers to a superficial or less deep indent than standard, measured at a load of 15N where x represents the diameter of the indenter which was ¼ inch.

The reliability of these alloys in this respect has already been published. A summary of the findings on the reliability studies of SnAgCuBi alloy can be found in the reference, Journal of Microelectronics and Electronic Packaging (2015) 12, 1-29.

Bismuth containing alloys formed excellent joints on organic solderability preservative (OSP) finish. The interfacial intermetallic layer was comparable to SnPb solders in thickness and shape, and thinner than in SAC305. The solder composition Sn2.25Ag0.5Cu6Bi (Violet), is compatible not only with OSP but also with electroless nickel immersion gold (ENIG) and electroless nickel electroless palladium immersion gold (ENEPIG), and forms excellent solder joints with uniform intermetallic layers on both BGA and leaded components.

All combinations of alloys tested (Paul (Sn3.4Ag4.8Bi) Violet, Orchid (Sn2Ag7Bi), SAC305, and SnPb), surface finishes (OSP, ENIG, and ENEPIG), and board laminate (normal and high glass transition (Tg)) passed the aerospace ATC qualification requirement of 1,000 cycles of 55 °C to 125 °C. There was no solder joint failure on both high gloss and normal Tg boards up to 3,010 cycles for Pb-free lower melt (Paul, Violet, and Orchid) and SAC305 alloys. All three experimental alloys (i.e., Paul, Violet, and Orchid) showed excellent performance in harsh-environment thermal cycling.

The vibration failure analysis was based on 1 million cycles at 2G and 5G, for failures found by resistance monitoring. The lowest failure rate found was for Violet at both the 2-G and 5-G levels; the failure rates were better than for SnAgCu solder alloys.

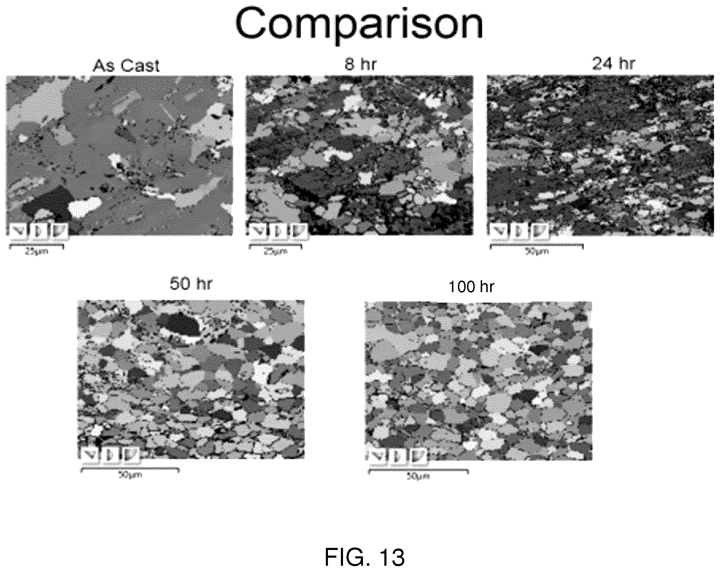

The microstructure improvement over time at 125°C is shown in FIG. 13. Small equiaxial grains forming during Bi particles dissolution and Bi precipitation on grain boundaries (depicted in the schematic of FIG. 14) provide exceptional creep and fatigue resistance.

Currently the electronics industry standards governing the use of soldering materials focus on the use of approved solder metal alloys, acceptable contaminant levels, and appropriate flux materials under appropriate manufacturing conditions. Specific process parameters for high reliability are not addressed. The relevant electronic industry IPC standards are listed below.

The standards include IPC J-STD-001 Requirements for Soldered Electrical and Electronic Assemblies , J-STD-001xS Space Hardware Addendum, J-STD-004 , J-STD-005 Requirements for Soldering Pastes, J-STD-006 Requirements for Electronic Grade Solder Alloys and Fluxed and Non-Fluxed Solid Solders for Electronic Soldering Applications, IPC-A-610 Acceptability of Electronic Assemblies, IPC/WHMA-A-620 Space Hardware Addendum Space Applications Electronic Hardware Addendum for IPC/WHMA-A-620.]

The thermal process parameters for each material are different and may be experimentally determined and verified.

The thermal treatment process described above may be used in the electronics assembly manufacturing processes.

With respect to the application of the thermal treatment step 16 to restoration, it has also been recognized that lead-free solder interconnect microstructures experience coarsening over time. Sn grain size increases and Bi or other precipitants get bigger and form solid rims around grain boundaries. These properties are degrading to the function of the solder joint.

The thermal treatment step 16 allows one to restore the microstructure and properties of lead-free alloys with solid solution and precipitation hardening.

Heating the assembly to a temperature near the solvus, allows Bi particles to be dissolved in Sn. For example, the assembly can be heated to about 65° to 100°C, for about 15 to 30 min. Following the heating step, the material is allowed to cool. During cooling, new small particles will precipitate evenly in the Sn matrix, which will improve thermomechanical properties.

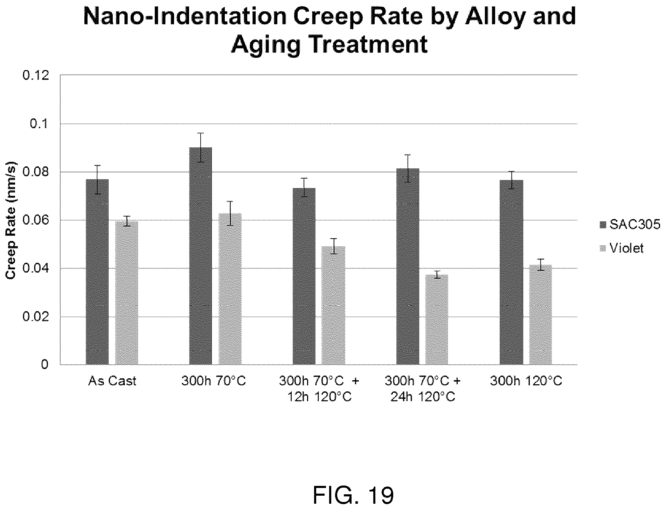

Further evidence of the improvement of mechanical properties by the conditioning treatment after aging in the field is provided by creep rate experimental data. FIG. 19 shows the creep rate after aging for Violet alloy (defined above) compared to SAC. Aging was simulated by 300 hours baking of solder joints below solvus at 70°C. A 24 hour treatment of aged samples at 120 °C was enough to provide a significant improvement in creep resistance. In this experiment with Violet alloy, additional treatments at higher temperatures of, for example 120°C for up to 300 hours did not show a significant additional benefit. However, additional treatment at higher temperatures and longer time periods may provide some additional benefit which in may be significant in certain instances.

## Claims

1. A method for conditioning a solder joint in an assembly comprising:
- i) obtaining an assembly having a solder joint wherein the solder joint is a lead-free solder joint comprising Bi and Sn and
- ii) heating the assembly to a temperature near the solvus temperature of the alloy,
wherein when the assembly has cooled the bismuth particles are smaller and more evenly distributed in the solder joint than before the heating step; and
wherein the temperature near the solvus temperature of the alloy is a temperature up to 5°C below the solvus or a temperature up to 40°C above the solvus;
wherein the lead-free solder joint comprises from 0 to 5 weight % Ag, 0 to 1 weight % Cu and 2 to 10 weight % Bi with the remainder being Sn; and
wherein the heat treating step is performed at a temperature of from 75 °C to 130 °C; wherein the heating step is a single cycle treatment having a duration of from 10 minutes to 24 hours; or wherein the heating step is a multiple cycle treatment comprising 2 or more heating cycles, wherein each heating cycle has a duration of 5 minutes to 8 hours with a period of cooling in between.

2. The method of any one of claims 1 wherein the Bi concentration is 2-7 weight %.

3. The method according to any one of claims 1-2 wherein the conditioning occurs after a reflow step to form the solder joint.

4. The method according to any one of claims 1-3 wherein the conditioning occurs after a period of using the assembly.

5. The method according to any one of claims 1-4 wherein the temperature is 120 ± 5°C.

6. A process for preparing an electronic assembly comprising
a) depositing a lead-free bismuth containing solder paste;
b) placing surface mount components;
c) reflow soldering; and
d) conditioning the lead-free bismuth containing solder joint by the method defined in any one of claims 1-5
wherein the lead-free solder joint comprises from 0 to 5 weight % Ag, 0 to 1 weight % Cu and 2 to 10 weight % Bi with the remainder being Sn.

## Patentansprüche

1. Verfahren zum Konditionieren einer Lötverbindung in einer Baugruppe, umfassend:
- i) Erhalten einer Baugruppe mit einer Lötverbindung, wobei die Lötverbindung eine bleifreie Lötverbindung ist, die Bi und Sn umfasst, und
- ii) Erhitzen der Baugruppe auf eine Temperatur nahe der Solvus-Temperatur der Legierung,
wobei, wenn die Baugruppe abgekühlt ist, die Wismutpartikel kleiner und gleichmäßiger in der Lötverbindung verteilt sind als vor dem Schritt des Erhitzens; und
wobei die Temperatur nahe der Solvus-Temperatur der Legierung eine Temperatur bis zu 5 °C unter das Solvus oder eine Temperatur bis zu 40 °C über das Solvus ist;
wobei die bleifreie Lötverbindung 0 bis 5 Gew.-% Ag, 0 bis 1 Gew.-% Cu und 2 bis 10 Gew.-% Bi umfasst, wobei der Rest Sn ist; und
wobei der Schritt des Wärmebehandelns bei einer Temperatur von 75 °C bis 130 °C durchgeführt wird;
wobei der Schritt des Erhitzens eine Einzelzyklusbehandlung mit einer Dauer von 10 Minuten bis 24 Stunden ist; oder wobei der Schritt des Erhitzens eine Mehrzyklusbehandlung ist, die 2 oder mehr Erhitzungszyklen umfasst, wobei jeder Erhitzungszyklus eine Dauer von 5 Minuten bis 8 Stunden mit einer Abkühlungsperiode dazwischen aufweist.

2. Verfahren nach einem der Ansprüche 1, wobei die Bi-Konzentration 2-7 Gew.-% beträgt.

3. Verfahren nach einem der Ansprüche 1-2, wobei das Konditionieren nach einem Reflow-Schritt erfolgt, um die Lötverbindung zu bilden.

4. Verfahren nach einem der Ansprüche 1-3, wobei das Konditionieren nach einer Periode des Verwendens der Baugruppe erfolgt.

5. Verfahren nach einem der Ansprüche 1-4, wobei die Temperatur 120 ± 5 °C beträgt.

6. Vorgang zum Herstellen einer elektronischen Baugruppe, umfassend
a) Abscheiden einer bleifreien wismuthaltigen Lötpaste;
b) Anordnen von oberflächenmontierten Komponenten;
c) Reflow-Löten; und
d) Konditionieren der bleifreien wismuthaltigen Lötverbindung durch das in einem der Ansprüche 1-5 definierte Verfahren, wobei die bleifreie Lötverbindung 0 bis 5 Gew.-% Ag, 0 bis 1 Gew.-% Cu und 2 bis 10 Gew.-% Bi umfasst, wobei der Rest Sn ist.

## Revendications

1. Procédé permettant le conditionnement d'un joint de soudure dans un assemblage comprenant :
- i) l'obtention d'un assemblage comportant un joint de soudure, ledit joint de soudure étant un joint de soudure sans plomb comprenant du Bi et du Sn et
- ii) le chauffage de l'assemblage à une température proche de la température de solvus de l'alliage,
lorsque l'assemblage a refroidi, lesdites particules de bismuth étant plus petites et réparties plus uniformément dans le joint de soudure qu'avant l'étape de chauffage ; et
ladite température proche de la température de solvus de l'alliage étant une température jusqu'à 5°C au-dessous du solvus ou une température jusqu'à 40°C au-dessus du solvus ;
ledit joint de soudure sans plomb comprenant de 0 à 5 % en poids d'Ag, de 0 à 1 % en poids de Cu et de 2 à 10 % en poids de Bi, le reste étant du Sn ; et
ladite étape de traitement thermique étant réalisée à une température de 75°C à 130°C ;
ladite étape de chauffage étant un traitement à cycle unique comportant une durée de 10 minutes à 24 heures ; ou ladite étape de chauffage étant un traitement à cycles multiples comprenant 2 cycles de chauffage ou plus, chaque cycle de chauffage comportant une durée de 5 minutes à 8 heures avec une période de refroidissement entre les deux.

2. Procédé selon l'une quelconque des revendications 1, ladite concentration en Bi étant de 2 à 7 % en poids.

3. Procédé selon l'une quelconque des revendications 1 à 2, ledit conditionnement se produisant après une étape de refusion pour former le joint de soudure.

4. Procédé selon l'une quelconque des revendications 1 à 3, ledit conditionnement se produisant après une période d'utilisation de l'assemblage.

5. Procédé selon l'une quelconque des revendications 1 à 4, ladite température étant de 120 ± 5°C.

6. Processus permettant la préparation d'un assemblage électronique comprenant
a) le dépôt d'une pâte à souder sans plomb contenant du bismuth ;
b) le placement des composants de montage en surface ;
c) le soudage par refusion ; et
d) le conditionnement du joint de soudure sans plomb contenant du bismuth par le procédé défini dans l'une quelconque des revendications 1 à 5
ledit joint de soudure sans plomb comprenant de 0 à 5 % en poids
d'Ag, de 0 à 1 % en poids de Cu et de 2 à 10 % en poids de Bi, le reste étant du Sn.
